Europäisches Patentamt

European Patent Office

Office européen des brevets

(11) Numéro de publication: **0 329 906**
**A1**

## (12) DEMANDE DE BREVET EUROPEEN

(21) Numéro de dépôt: 88400429.2

(22) Date de dépôt: 24.02.88

(51) Int. Cl.4: **F16J 1/12 , F16J 1/16 , F02F 3/00**

(43) Date de publication de la demande:
30.08.89 Bulletin 89/35

(84) Etats contractants désignés:
AT BE CH DE ES GB GR IT LI LU NL SE

(71) Demandeur: LE MOTEUR MODERNE
9, rue Benoît Frachon
F-91120 Palaiseau(FR)

(72) Inventeur: Roy, Robert
41, rue de l'Orme
F-91460 Marcoussis(FR)

(74) Mandataire: Lemoine, Robert et al
Cabinet Malémont 42, Avenue du Président
Wilson
F-75116 Paris(FR)

(54) Equipage mobile pour moteur thermique et moteur thermique comportant un tel équipage mobile.

(57) L'équipage mobile pour moteur thermique selon l'invention comprend une tête de piston (1) et une jupe (2) déplaçables alternativement dans l'alésage (3) d'un cylindre (4) sous la commande d'une bielle (5) attelée à un vilebrequin.

Il se caractérise en ce que la bielle (5) et la jupe (2) forment un ensemble unitaire (7) articulé sur la tête de piston (1), la jupe (2) étant de forme sphérique et ayant, au jeu de fonctionnement près, le même diamètre que l'alésage (3) du cylindre (4).

Selon un premier mode de réalisation, l'ensemble unitaire (7) est articulé sur la tête de piston (1) par l'intermédiaire d'un axe (8) passant par le centre de la jupe (2) et s'étendant parallèlement à l'axe d'articulation de la bielle (5) sur le vilebrequin.

Selon un second mode de réalisation, l'ensemble unitaire est articulé sur la tête de piston par l'intermédiaire d'une rotule dont le centre coïncide avec celui de la jupe.

FIG.1

# Equipage mobile pour moteur thermique et moteur thermique comportant un tel équipage mobile

La présente invention concerne un équipage mobile pour moteur thermique comprenant une tête de piston et une jupe déplaçables alternativement dans l'alésage d'un cylindre sous la commande d'une bielle attelée à un vilebrequin.

Pratiquement tous les pistons des moteurs thermiques comprennent une tête de piston et une jupe monoblocs destinées à assurer respectivement l'étanchéité aux gaz et le guidage des pieds des bielles.

Comme l'inclinaison des bielles varie périodiquement pendant que les pistons se déplacent entre leurs positions extrêmes, ceux-ci ont tendance à osciller autour des axes les reliant aux bielles et à exercer des efforts radiaux sur deux zones diamétralement opposées de la surface interne des cylindres. Sous l'effet des oscillations, les jupes des pistons sont toutefois soumises à une usure irrégulière favorisant l'apparition de défauts d'étanchéité.

Pour remédier à cet inconvénient, certains constructeurs ont déjà proposé des solutions pour empêcher les pistons d'osciller. C'est ainsi qu'ont été mis au point les moteurs à crosse dont les équipages mobiles comprennent une tête de piston reliée à une jupe par l'intermédiaire d'une première bielle s'étendant le long de l'axe du cylindre correspondant, la jupe étant quant à elle articulée sur une seconde bielle attelée au vilebrequin.

Ces moteur qui sont destinés à propulser des bateaux ou à entraîner des machines très lourdes ne peuvent toutefois être utilisés pour d'autres applications.

Il existe également des moteurs dont les équipages mobiles comprennent une tête de piston et une jupe constituant deux pièces différentes articulées entre elles et sur la bielle correspondante par l'intermédiaire d'un axe commun.

Ces moteurs ont quant à eux l'inconvénient d'avoir une structure complexe et coûteuse.

La présente invention se propose de remédier aux inconvénients des moteurs susmentionnés et, pour ce faire, elle a pour objet un équipage mobile qui se caractérise en ce que la bielle et la jupe forment un ensemble unitaire articulé sur la tête de piston, la jupe étant de forme sphérique et ayant, au jeu de fonctionnement près, le même diamètre que l'alésage du cylindre.

Grâce à cette disposition, la tête de piston ne peut osciller pendant le fonctionnement du moteur puisque c'est maintenant la bielle, par l'intermédiaire de la jupe, qui exerce les efforts radiaux sur la surface interne du cylindre. Les défauts d'étanchéité qui apparaissaient jusqu'ici sous l'action des oscillations de la tête de piston sont donc évités.

Selon un mode de réalisation particulier de l'invention, l'ensemble unitaire est articulé sur la tête de piston par l'intermédiaire d'un axe passant par le centre de la jupe et s'étendant parallèlement à l'axe d'articulation de la bielle sur le vilebrequin.

Selon un autre mode de réalisation de l'invention, l'ensemble unitaire est articulé sur la tête de piston par l'intermédiaire d'une rotule dont le centre coïncide avec celui de la jupe, la rotule comportant une sphère portée par la tête de piston, une cavité de forme sphérique ménagée dans le pied de la bielle, et un chapeau de rotule maintenu à la périphérie de la cavité pour retenir la sphère.

Bien entendu, la présente invention concerne également les moteurs thermiques comprenant un équipage mobile présentant les caractéristique décrites ci-dessus.

Plusieurs modes d'exécution de la présente invention seront décrits ci-après à titre d'exemples nullement limitatifs en référence aux dessins annexés dans lesquels :

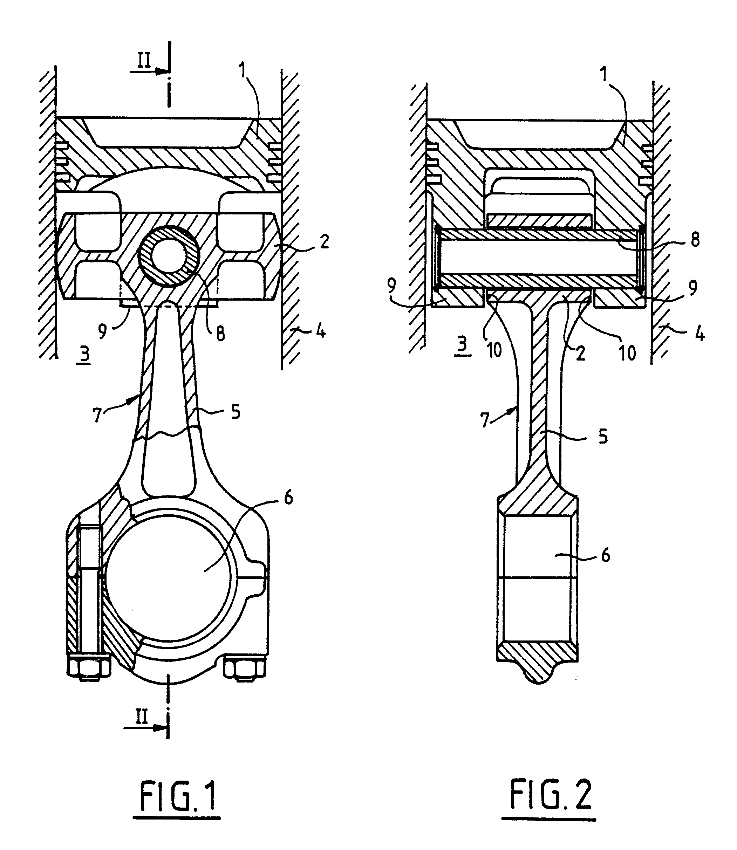

. la figure 1 est une vue en coupe d'un équipage mobile selon un premier mode de réalisation ;

. la figure 2 est une vue en coupe effectuée selon la ligne II-II de la figure 1;

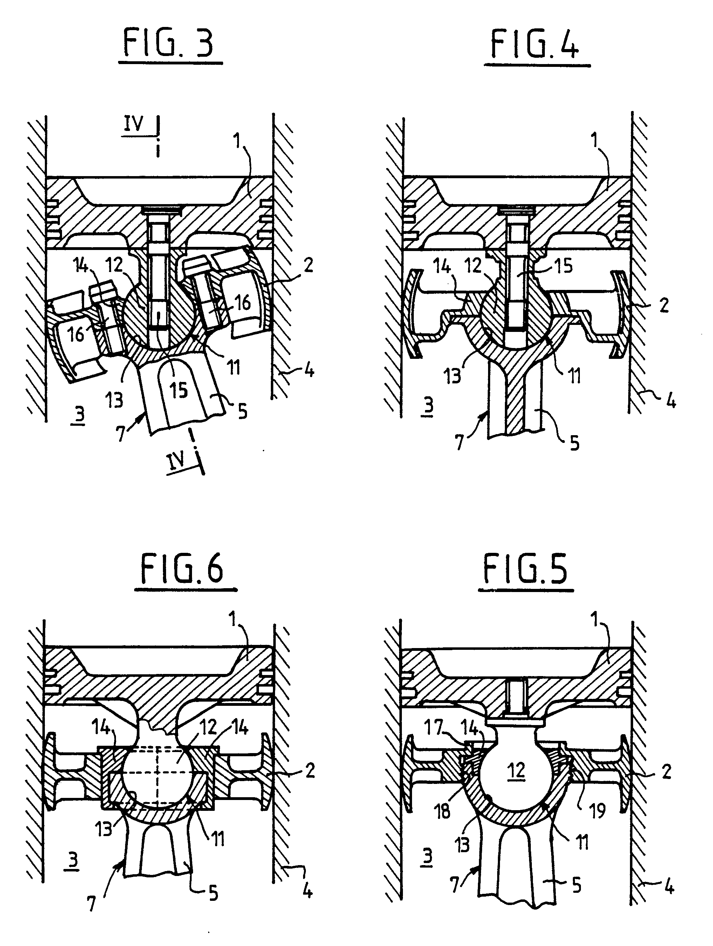

. la figure 3 est une vue en coupe d'un équipage mobile selon un second mode de réalisation, l'extrémité inférieure de la bielle n'étant pas représentée ;

. la figure 4 est une vue en coupe effectuée selon la ligne IV-IV de la figure 3 ; et

. les figures 5 et 6 sont des vues analogues à la figure 3 montrant des variantes du second mode de réalisation.

L'équipage mobile que l'on peut voir sur les dessins comprend une tête de piston 1 et une jupe 2 déplaçables alternativement dans l'alésage 3 d'un cylindre 4 sous la commande d'une bielle 5, celle-ci étant pourvue d'un alésage 6 destiné à recevoir un maneton de vilebrequin non représenté.

D'une manière connue en soi, la tête de piston 1 comporte sur la surface extérieure de sa paroi latérale des gorges annulaires destinées à recevoir des segments destinés à assurer l'étanchéité entre la paroi du cylindre et la tête de piston.

La caractéristique de l'équipage mobile selon l'invention réside dans le fait que la jupe 2 et la bielle 5 forment un ensemble unitaire 7 articulé sur la tête de piston 1 et que la jupe 2 est de forme sphérique et a, au jeu de fonctionnement près, le même diamètre que l'alésage 3 du cylindre 4.

Dans le mode de réalisation représenté sur les figures 1 et 2, l'ensemble unitaire 7 est articulé sur la tête de piston 1 par l'intermédiaire d'un axe 8 passant par le centre de la jupe 2 et s'étendant parallèlement à l'axe de l'alésage 6.

Selon ce mode de réalisation, la tête de piston 1 porte une chape sur les branches 9 de laquelle s'appuient les extrémités de l'axe 8. Quant à la jupe 2, elle a la forme d'un segment sphérique présentant deux méplats latéraux 10 adjacents aux faces en regard des branches 9 de la chape.

Dans les exemples de réalisation représentés sur les figures 3 à 6, l'ensemble unitaire 7 est articulé sur la tête de piston 1 par l'intermédiaire d'une rotule 11 dont le centre coïncide avec celui de la jupe 2, cette rotule comportant une sphère 12 portée par la tête de piston 1, une cavité de forme sphérique 13 ménagée dans le pied de la bielle 5 et un chapeau de rotule 14 maintenu à la périphérie de la cavité 13 pour retenir la sphère 12.

Dans le mode de réalisation représenté sur les figures 3 et 4, la sphère 12 est une pièce rapportée fixée par une vis 15 sur la tête de piston 1 tandis que le chapeau de rotule 14 est venu de matière avec la jupe 2 et est fixé à la bielle 5 par des organes filetés tels que les bis 16.

Pour monter l'équipage mobile représenté sur les figures 3 et 4, on applique la sphère 12 contre la surface interne de la cavité 13, on fixe le chapeau de bielle 14 sur la bielle 5 à l'aide des vis 16 et l'on relie la sphère 12 à la tête de piston 1 à l'aide de la vis 15.

Dans le mode de réalisation représenté sur la figure 5, la sphère 12 est une pièce rapportée fixée par vissage sur la tête de piston 1 tandis que le chapeau de rotule 14 est interposé entre le pied de la bielle 5 et la jupe 2. Plus précisément, la jupe 2 comporte un orifice central comprenant à l'une de ses extrémités une collerette interne 17 s'appuyant contre la face supérieure du chapeau de rotule 14, et à son autre extrémité un filetage 18 en prise avec un filetage 19 ménagé à la périphérie du pied de la bielle 5.

Le montage de l'équipage mobile représenté sur la figure 5 est réalisable en appliquant la sphère 12 contre la surface interne de la cavité 13, en enfilant le chapeau de rotule 14 sur la sphère 12 de manière à le positionner à l'entrée de la cavité 13, en vissant la jupe 2 sur le pied de la bielle 5, et en vissant la sphère 12 sur la tête de piston 1.

Dans le mode de réalisation représenté sur la figure 6, la sphère 12 est venue de matière avec la tête de piston 1 tandis que le chapeau de rotule 14 est constitué de deux pièces symétriques entourant le pied de la bielle 5 et maintenues en place l'une contre l'autre par la jupe 2 qui les entoure. Des moyens de fixation non représentés sont prévus pour relier la jupe 2 au pied de la bielle 5 et éviter ainsi qu'elle puisse se séparer accidentellement du reste de l'équipage mobile.

Pour monter l'équipage mobile représenté sur la figure 6, on enfile la jupe 2 sur le pied de la bielle 5, on applique la sphère 12 contre la surface de la cavité 13, on applique les parties constitutives du chapeau de rotule 14 l'une contre l'autre autour du pied de la bielle 5 et on fixe la jupe 2 autour du chapeau de rotule 14.

Il ressort clairement de ce qui précède que la tête de piston 1 ne peut plus osciller pendant que l'équipage mobile se déplace entre ses positions extrêmes. Comme la bielle 5 et la jupe 2 constituent un ensemble unitaire articulé sur la tête de piston, c'est en effet cet ensemble seul qui exerce les efforts radiaux sur la surface interne du cylindre. Les défauts d'étanchéité qui étaient dus jusqu'ici aux oscillations de la tête de piston sont donc éliminés.

## Revendications

1. Equipage mobile pour moteur thermique, comprenant une tête de piston (1) et une jupe (2) déplaçables alternativement dans l'alésage (3) d'un cylindre (4) sous la commande d'une bielle (5) attelée à un vilebrequin, caractérisé en ce que la bielle (5) et la jupe (2) forment un ensemble unitaire (7) articulé sur la tête de piston (1), la jupe (2) étant de forme sphérique et ayant, au jeu de fonctionnement près, le même diamètre que l'alésage (3) du cylindre (4).

2. Equipage mobile selon la revendication 1, caractérisé en ce que l'ensemble unitaire (7) est articulé sur la tête de piston (1) par l'intermédiaire d'un axe (8) passant par le centre de la jupe (2) et s'étendant parallèlement à l'axe d'articulation de la bielle (5) sur le vilebrequin.

3. Equipage mobile selon la revendication 2, caractérisé en ce que la tête de piston (1) porte une chape sur les branches (9) de laquelle s'appuie l'axe d'articulation (8) de l'ensemble unitaire (7), la jupe (2) ayant la forme d'un segment sphérique présentant deux méplats latéraux (10) adjacents aux faces en regard des branches (9) de la chape.

4. Equipage mobile selon la revendication 1, caractérisé en ce que l'ensemble unitaire (7) est articulé sur la tête de piston (1) par l'intermédiaire d'une rotule (11) dont le centre coïncide avec celui de la jupe (2), la rotule (11) comportant une sphère (12) portée par la tête de piston (1), une cavité de forme sphérique (13) ménagée dans le pied de la bielle (5), et un chapeau de rotule (14) maintenu à la périphérie de la cavité (13) pour retenir la sphère (12).

5. Equipage mobile selon la revendication 4, caractérisé en ce que la sphère (12) est une pièce rapportée fixée sur la tête de piston (1) tandis que le chapeau de rotule (14) est venu de matière avec la jupe (2) et est fixé à la bielle par des organes filetés (16).

6. Equipage mobile selon la revendication 4, caractérisé en ce que la sphère (12) est une pièce rapportée fixée sur la tête de piston (1) tandis que le chapeau de rotule (14) est interposé entre le pied de la bielle (5) et la jupe (2) et est maintenu en place par des moyens de fixation (18, 19) reliant la jupe (2) au pied de la bielle (5).

7. Equipage mobile selon la revendication 4, caractérisé en ce que la sphère (12) est venue de matière avec la tête de piston (1) tandis que le chapeau de rotule (14) est formé de deux pièces symétriques entourant le pied de la bielle (5) et maintenues en place par des moyens de fixation les reliant à la jupe (2).

8. Moteur thermique comprenant au moins un équipage mobile selon l'une quelconque des revendications précédentes.

## FIG.1

## FIG.2

FIG. 3

FIG. 4

FIG. 6

FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A- 429 670 (REDRUP)<br>* Page 1, ligne 1 - page 2, ligne 73; figures 1-4 *<br>--- | 1-3,8 | F 16 J 1/12<br>F 16 J 1/16<br>F 02 F 3/00 |
| Y | FR-A-2 484 041 (SKF)<br>* Page 1, lignes 1-10; page 3, ligne 6 - page 4, ligne 14; figures 1-7 *<br>--- | 1-3,8 | |
| Y | GB-A- 301 906 (KROMHOUT)<br>* Page 1, ligne 73 *<br>--- | 1-3,8 | |
| A | FR-A-1 091 996 (GOURNAY)<br>* Page 1, colonne de droite, alinéas 5-7; figure 1 *<br>--- | 4-7 | |
| A | FR-A- 508 158 (PIFARRE)<br>--- | | |
| A | US-A-1 752 816 (SOLOGAISTOA)<br>--- | | |
| A | GB-A- 118 043 (DRAPER)<br>--- | | DOMAINES TECHNIQUES RECHERCHES (Int. Cl.4) |
| A | GB-A- 22 595 (SEFTON-JONES)(A.D. 1909)<br>--- | | F 02 F<br>F 16 J<br>F 16 C |
| E,X | FR-A-2 609 502 (LE MOTEUR MODERNE)<br>* Pages 6,7; figures 1-6 *<br>----- | 1-8 | |

Le présent rapport a été établi pour toutes les revendications

| Lieu de la recherche | Date d'achèvement de la recherche | Examinateur |
|---|---|---|
| LA HAYE | 04-10-1988 | KOOIJMAN F.G.M. |